# EUROPÄISCHE PATENTSCHRIFT

(11) **EP 3 862 580 B1**
(45) Veröffentlichungstag und Bekanntmachung des Hinweises auf die Patenterteilung: **27.03.2024**
(21) Anmeldenummer: 20210356.0
(22) Anmeldetag: 27.11.2020
(51) Int. Cl.: F16B 5/02, F16B 33/00, F16B 25/00, F16B 35/06

(54) **BEFESTIGUNGSVORRICHTUNG MIT SCHRAUBE UND DARAN DREHBAR UND VERSCHIEBEGESICHERT ANGEBRACHTEM THERMISCHEN ISOLATIONSKÖRPER**
FASTENING DEVICE COMPRISING A SCREW AND A THERMAL INSULATING ELEMENT ATTACHED TO IT WHICH IS ROTATABLE AND SECURED AGAINST SLIDING
DISPOSITIF DE FIXATION COMPRENANT UNE VIS ET UN CORPS ISOLANT THERMIQUE FIXÉ À CELLE-CI D'UNE MANIÈRE ROTATIVE ET BLOQUÉE AXIALEMENT

(30) Priorität: 07.02.2020 DE 102020103212
(43) Veröffentlichungstag der Anmeldung: 11.08.2021
(73) Patentinhaber: Adolf Würth GmbH & Co. KG, 74653 Künzelsau (DE); Würth International AG, 7000 Chur (CH)
(72) Erfinder: Wieland, Achim, 74211 Leingarten (DE)
(74) Vertreter: Dilg, Haeusler, Schindelmann Patentanwaltsgesellschaft mbH

(56) Entgegenhaltungen:
- EP-A2- 0 267 161
- EP-A2- 1 293 685
- EP-A2- 2 466 025
- DE-A1-102005 022 449

## Beschreibung

Die Erfindung betrifft ein Herstellungsverfahren, eine Befestigungsvorrichtung, eine Montageanordnung und ein Verfahren zum Montieren eines Anbauteils an einen Verankerungsgrund.

Während für Montagearbeiten, bei denen ein Anbauteil direkten Kontakt mit dem Verankerungsgrund hat, eine große Anzahl von Systemen und Produkten zur Verfügung steht, bereitet die so genannte Abstandsmontage immer wieder Probleme. Teilweise auch im Neubau, gerade aber in der Sanierung, tritt oft der Fall auf, dass der Verankerungsgrund mit einer zusätzlichen Dämmung oder dergleichen versehen werden soll. Bei Montage eines Anbauteils an einen Verankerungsgrund, wobei zwischen diesen die Dämmschicht angeordnet ist, soll die Dämmschicht mittels eines Verankerungselementes überbrückt werden, um die Einleitung von Kräften in den Verankerungsgrund zu ermöglichen. Dabei wird das Anbauteil entsprechend einer Setz- und Montageanweisung des gewählten Verankerungselementes montiert.

Die Firma Würth bietet zum Beispiel zur Montage eines Fensterrahmens an einer Wand die Abstandsmontageschraube Amo III an. Diese stellt eine in der Praxis einfach handhabbare Abstandsmontageschraube dar, mit der es ermöglicht ist, Fenster präzise zu befestigen. Bei der Abstandsmontageschraube Amo III handelt es sich um eine selbst hinterschneidende Schraube, die ohne einen Dübel auskommt und alle angreifenden Lasten mittels Formschluss in den Untergrund einleitet.

Zur Abstandsmontage bei gedämmten Fassaden gibt es den AMO-Therm für schwere Lasten und den AMO light für leichte Lasten.

EP 2 853 654 offenbart eine Konsole für die Anbringung von Fassadenelementen an einer Gebäudewand und umfasst einen Stab mit einem vorderen Einführende zur Verankerung in der Gebäudewand und ein hinteres Kopfstück, das am Stab angeordnet ist und eine Befestigungsmöglichkeit für die Befestigung von Fassadenelementen hat. Das Einführende des Stabs hat mindestens einen im Durchmesser verjüngten Zwischenabschnitt. Der Stab ist außerdem als Verbundkörper gefertigt mit einer Faserverstärkung, die bevorzugt durch ein mehrheitlich unidirektionales Fasergewebe oder durch im Wesentlichen in Längsrichtung ausgerichtete Rovingstränge gebildet ist.

EP 1 936 065 offenbart einen Abstandshalter für die Befestigung eines Gegenstands an einer eine Dämmschicht und eine Putzschicht aufweisenden Wand, mit einer Schraube, und mit einem Isolierkörper, der im Wesentlichen ein Rotationskörper ist, der koaxial zur Schraube und die Schraube über ihr hinteres Ende hinweg verlängernd am hinteren Ende der Schraube angebracht ist, und der ein Einschraubloch an einem hinteren Ende zum Einschrauben einer Befestigungsschraube von hinten in den Abstandshalter aufweist. Der Isolierkörper weist eine Abdeckkappe auf, die durch Formschluss drehfest auf ein hinteres, der Schraube abgewandtes Ende des Isolierkörpers aufsetzbar ist. Die Abdeckkappe weist einen nicht kreisrunden Umriss auf, der zu einem formschlüssigen Eingriff mit der Putzschicht zur Drehsicherung an mindestens einer Umfangsstelle seitlich über den Isolierkörper übersteht. Ein Drehantrieb des Abstandshalters zum Einschrauben erfolgt an seinem hinteren Ende an einem einen Werkzeugsitz bildenden Mehrkant des Isolierkörpers.

EP 1 293 685 A2 offenbart einen Abstandshalter für die Befestigung eines Gegenstandes an einer eine Dämmschicht aufweisenden Wand, wobei der Abstandshalter aus einer Distanzschraube und zwei im Abstand angeordneten Gewindeabschnitten besteht und der vordere Gewindeabschnitt in einem Mauerwerk verankerbar ist. Auf dem hinteren Gewindeabschnitt ist eine Abstandshülse aufgeschraubt, die eine über das hintere Ende der Distanzschraube überstehende Verlängerung mit einer Aufnahmebohrung für eine Befestigungsschraube aufweist.

Für leichte bis mittlere Lasten gibt es keine Lösung für ein absolut wärmebrückenfreies System, bei der ein Verankerungsgrund mit hoher Zuverlässigkeit beim Befestigen unbeschädigt bleibt.

Es ist eine Aufgabe der vorliegenden Erfindung, eine Befestigungsvorrichtung, insbesondere für die Abstandsmontage, bereitzustellen, die im Wesentlichen wärmebrückenfrei an einem Verankerungsgrund und ohne nennenswerte Beschädigungsgefahr desselben montierbar ist.

Diese Aufgabe wird durch die Gegenstände gemäß den unabhängigen

Patentansprüchen gelöst. Bevorzugte Ausgestaltungen ergeben sich aus den abhängigen Patentansprüchen.

Gemäß einem Ausführungsbeispiel der vorliegenden Erfindung ist eine Befestigungsvorrichtung zum Befestigen eines Anbauteils an einem Verankerungsgrund geschaffen, wobei die Befestigungsvorrichtung eine Schraube, die zumindest abschnittsweise mit einem Außengewinde zum Eindrehen in den Verankerungsgrund versehen ist, und einen thermisch isolierenden Isolationskörper aufweist, der auf einem Endabschnitt der Schraube und gegenüber der Schraube drehbar und verschiebegesichert angebracht ist (dies kann alternativ auch dahingehend ausgedrückt werden, dass die Schraube gegenüber dem Isolationskörper drehbar ist und mit dem Isolationskörper verschiebegesichert verbunden ist, insbesondere in Längsrichtung verschiebegesichert verbunden ist) und eine Befestigungseinrichtung zum Befestigen des Anbauteils aufweist, wenn die Schraube in dem Verankerungsgrund verankert ist, und wobei der Isolationskörper an seiner Außenseite eine Verdrehschutzstruktur aufweist,

Gemäß einem anderen Ausführungsbeispiel ist eine Montageanordnung bereitgestellt, die eine Befestigungsvorrichtung mit den oben beschriebenen Merkmalen, ein Anbauteil und einen Verankerungsgrund aufweist, wobei die Schraube der Befestigungsvorrichtung derart in den Verankerungsgrund eingebracht oder einbringbar ist, dass das Anbauteil an der freiliegenden Befestigungseinrichtung des Isolationskörpers der Befestigungsvorrichtung befestigt oder befestigbar ist, wodurch das Anbauteil an dem Verankerungsgrund befestigt oder befestigbar ist.

Gemäß noch einem anderen Ausführungsbeispiel der vorliegenden Erfindung ist ein Verfahren zum Befestigen eines Anbauteils an einem Verankerungsgrund bereitgestellt, wobei das Verfahren ein Eindrehen einer Schraube einer Befestigungsvorrichtung mit den oben beschriebenen Merkmalen ohne Mitdrehen des Isolationskörpers in den Verankerungsgrund derart, dass die Befestigungseinrichtung des Isolationskörpers nach dem Eindrehen freiliegt, und ein nachfolgendes Befestigen des Anbauteils an der freiliegenden Befestigungseinrichtung aufweist.

Gemäß noch einem anderen Ausführungsbeispiel der vorliegenden Erfindung ist ein Verfahren zum Herstellen einer Befestigungsvorrichtung zum Befestigen eines Anbauteils an einem Verankerungsgrund geschaffen, wobei das Verfahren ein Bereitstellen einer Schraube, die zumindest abschnittsweise mit einem Außengewinde zum Eindrehen in den Verankerungsgrund versehen ist, ein gegenüber der Schraube drehbares und verschiebegesichertes Anbringen eines thermisch isolierenden Isolationskörpers auf einem Endabschnitt der Schraube, ein Ausbilden einer Befestigungseinrichtung an dem Isolationskörper zum Befestigen des Anbauteils, wenn die Schraube in dem Verankerungsgrund verankert ist, und ein Ausbilden einer Verdrehschutzstruktur an der Außenseite des Isolationskörpers aufweist,

Im Rahmen dieser Anmeldung kann unter dem Begriff "Anbauteil" insbesondere ein Bauteil verstanden werden, das an einem Verankerungsgrund mit oder ohne Abstand montierbar ist. Somit kann ein Anbauteil an dem Verankerungsgrund unter Beibehaltung eines vorbestimmten Abstands oder direkt daran anschließend angebaut werden. Beispiele für solche Anbauteile sind Briefkästen, Fallrohre oder Lampen.

Im Rahmen dieser Anmeldung kann unter dem Begriff "Verankerungsgrund" insbesondere ein zum Verankern des Befestigungselements geeigneter Untergrund verstanden werden. Ein solcher Verankerungsgrund kann insbesondere eine Wand, weiter insbesondere eine vertikale Wand, sein oder aufweisen. Materialien für einen solchen Verankerungsgrund sind insbesondere Holz oder Holzbaustoffe, oder aber auch Beton- und Mauerwerksbaustoffe, Metall oder Kunststoffbauteile. Ferner kann ein solcher Verankerungsgrund auch ein beliebiger Kompositwerkstoff aus mehreren unterschiedlichen Materialkomponenten sein. Der Verankerungsgrund kann Hohlräume aufweisen oder kann massiv (d.h. von Hohlräumen frei) sein.

Im Rahmen der vorliegenden Anmeldung wird unter dem Begriff "thermisch isolierender Isolationskörper" ein Bauteil aus einem thermisch isolierenden oder zumindest thermisch sehr schlecht leitfähigen Material verstanden, dessen Wärmeleitfähigkeit so gering ist, dass bei Montage an einer mit einer Dämmschicht bedeckten Wand und bei einem Anordnen des Isolationskörpers in und/oder an der Dämmschicht keine nennenswerte Wärmebrücke zwischen einem Inneren des Gebäudes und dem Äußeren des Gebäudes ermöglicht ist, sondern im Gegenteil durch den Isolationskörper im Zusammenwirken mit der Dämmschicht verunmöglicht ist.

Im Rahmen der vorliegenden Anmeldung wird unter dem Begriff "drehbares und verschiebegesichertes Anordnen des Isolationskörpers auf der Schraube" insbesondere verstanden, dass bei einem Eindrehen der Schraube in eine Wand bzw. einen Verankerungsgrund der Isolationskörper einerseits vor einem Mitdrehen geschützt ist und andererseits mechanisch verunmöglicht ist, dass sich der Isolationskörper (insbesondere in Setzrichtung) der Schraube gegenüber der Schraube relativ verschiebt. Vielmehr folgt der Isolationskörper insbesondere in Setzrichtung einer Längsbewegungskomponente der Schrauben, einer drehenden Komponente der Schraubenbewegung um deren Achse aber nicht.

Im Rahmen der vorliegenden Anmeldung wird unter einer "Befestigungseinrichtung" eine strukturelle mechanische Vorkehrung an dem Isolationskörper verstanden, die eine Montage eines Anbauteils an besagter Befestigungseinrichtung ermöglicht. Beispielsweise kann eine solche Befestigungseinrichtung ein Innengewinde sein, das mit einem Bolzen mit Außengewinde des Anbauteils verschraubt werden kann. Alternativ kann die Befestigungseinrichtung zum Beispiel ein Bolzen mit Außengewinde sein, der mit einem hülsenartigen Abschnitt mit Innengewinde eines Anbauteils verschraubt werden kann. Andere mechanische Verbindungselemente, zum Beispiel das Ausbilden einer Rastverbindung, einer magnetischen Verbindung, einer Kegelverbindung, einer Dübelverbindung oder dergleichen mittels der Befestigungseinrichtung sind ebenfalls möglich.

Gemäß einem exemplarischen Ausführungsbeispiel der Erfindung ist eine Befestigungsvorrichtung zum Befestigen eines Anbauteils (insbesondere mittels Abstandsmontage) an einem Verankerungsgrund bereitgestellt, bei der eine Schraube der Befestigungsvorrichtung zunächst in den Verankerungsgrund eingeschraubt wird. Dies kann derart erfolgen, dass eine feste Verbindung zwischen einem Schaft der Schraube angrenzend an deren Spitze und einem festen Bereich (beispielsweise einer Wand) des Verankerungsabschnitts ausgebildet wird. Um zum Beispiel eine thermisch isolierende Montage zu ermöglichen, bei der ein Taupunkt an eine Außenseite eines Gebäudes verlegt wird bzw. das Entstehen von Tauwasser innerhalb des Verankerungsgrunds vermieden werden kann, kann die tragende Wand mit einer thermisch isolierenden Dämmschicht oder dergleichen belegt sein. Ein wandferner Abschnitt der Schraube kann auch in einer solchen Dämmschicht teilweise angeordnet sein. Mit dem Eindrehen der Schraube bewegt sich auch der thermisch isolierende Isolationskörper, der zur thermischen Isolation zwischen einem Äußeren und einem Inneren des Verankerungsgrunds beiträgt, in den Verankerungsgrund hinein oder an den Verankerungsgrund hin. Beispielsweise kann der thermisch isolierende Isolationskörper zumindest teilweise in die Dämmschicht eingeführt werden, wenn die Schraube in den Verankerungsgrund eingebracht wird. Mit Vorteil kann dies dergestalt erfolgen, dass der thermische Isolationskörper aufgrund seiner Lagerung an der Schraube einer Axialbewegung der Schraube folgt, aber keine Drehbewegung beim drehenden Einbringen der Schraube vollführt. Dadurch kann der Isolationskörper axial und unter Generierung einer zusätzlichen Befestigungskraft beschädigungsfrei bzw. äußerst beschädigungsarm in den Verankerungsgrund eingebracht werden, zum Beispiel in eine Dämmschicht desselben. Auf diese Weise ist eine stabile Verankerung der Befestigungsvorrichtung an dem Verankerungsgrund und eine thermische Isolation zwischen einem Äußeren und einem Inneren des Verankerungsgrunds ermöglicht, insbesondere wenn der thermisch isolierende Isolationskörper (vorzugsweise nur) im Bereich der Dämmschicht verankert wird. Indem die Lagerung des Isolationskörpers an der Schraube dergestalt ausgebildet ist, dass der Isolationskörper einer Axialbewegungskomponente der Schraube folgt, nicht aber einer Drehbewegungskomponente, ist ein einfaches und sicheres Setzen der Befestigungsvorrichtung in dem Verankerungsgrund ohne nennenswerte Beschädigung desselben ermöglicht. Unerwünschte Wärmebrücken oder Schwachstellen in der Befestigung treten dabei nicht auf. Anschaulich kann sich der Isolationskörper in der Dämmschicht bzw. einer Putzschicht verhaken, sich aber nicht verdrehen. Vielmehr wird der Isolationskörper beim Eindrehen der Schraube in den Untergrund längs in den Untergrund hineingezogen. Auch ist eine erfindungsgemäße Befestigungsvorrichtung mit Toleranzen, d.h. einem schwankenden Abstand zwischen Anbauteil und Wand eines Verankerungsgrunds, kompatibel. Wird eine solche Befestigungsvorrichtung in einen Verankerungsgrund gesetzt, der eine Wand, eine Dämmschicht und eine Putzschicht aufweist, kann die Putzschicht beim Befestigungsvorgang unversehrt bleiben und kann eine Rissbildung in der Putzschicht unterbunden werden. Eine solche Befestigungsvorrichtung kann mit geringem Herstellungsaufwand produziert werden, mit geringem Aufwand montiert werden und ermöglicht gleichzeitig eine sichere und thermisch isolierende Befestigung eines Anbauteils an einem Verankerungsgrund. Das Anbauteil selbst kann nach dem Setzen der Befestigungsvorrichtung in den Verankerungsgrund an der Befestigungseinrichtung montiert werden, die am Ende des Setzvorgangs zum Anbringen des Anbauteils freiliegt. Die beschriebene Befestigungsvorrichtung kann insbesondere vorteilhaft im Bereich mittelschwerer Lasten eingesetzt werden, zum Beispiel zur Montage einer Lampe, eines Fallrohrs oder eines Briefkastens an einer Wand.

Eine durch die relative Verdrehbarkeit unterbundene feste Verbindung zwischen Schraube und Isolationskörper überträgt mit Vorteil keine Drehbewegungskomponente der Schraube auch auf den Isolationskörper. Der Isolationskörper auf der Schraube ist drehbar und nur in Längs- und Querrichtung fest gelagert. Dadurch wird der Isolationskörper bei Einschrauben der Schraube nur in den Verankerungsgrund (insbesondere nur in einen weicheren Abschnitt des Verankerungsgrunds) eingezogen, ohne sich zu drehen. Eine solche Befestigungsvorrichtung ermöglicht eine einfache und schnelle Montage, ist mit geringem Aufwand herstellbar und kann für verschiedenste Untergründe (zum Beispiel für alle Dämmstoffdicken) flexibel eingesetzt werden. Die Befestigungsvorrichtung ermöglicht zudem eine zuverlässige und dauerhafte Sicherung gegen Mitdrehen des Isolationskörpers im Verankerungsgrund.

Im Weiteren werden zusätzliche Ausführungsbeispiele des Herstellungsverfahrens, der Befestigungsvorrichtung, der Montageanordnung und des Montageverfahrens beschrieben.

Gemäß einem Ausführungsbeispiel kann der Isolationskörper auf der Schraube nur in Längsrichtung und Querrichtung fest gelagert sein. Dadurch ist anschaulich sowohl eine Relativbewegung des Isolationskörpers in Längs- als auch in Querrichtung relativ zu der Schraube mechanisch verunmöglicht. Lediglich ein Drehen des Isolationskörpers relativ zu der Schraube ist aufgrund der drehbaren Lagerung ermöglicht.

Gemäß einem Ausführungsbeispiel kann im Wesentlichen ein gesamter Schaft der Schraube mit dem Außengewinde versehen sein. Wenn der gesamte Schaft der Schraube mit einem Außengewinde versehen ist, kann für unterschiedliche Dicken eines Verankerungsgrunds und insbesondere für unterschiedliche Dicken einer Dämmschicht auf einer (zum Beispiel Holz- oder Stein-) Wand ein und dieselbe Befestigungsvorrichtung verwendet werden. Die Schraube dreht sich dann einfach so tief in den Verankerungsgrund ein, wie dies aufgrund der geometrischen Verhältnisse festgelegt ist. Das Mitführen unterschiedlicher Befestigungsvorrichtungen an einer Baustelle oder für unterschiedliche Montageaufgabe kann dadurch entbehrlich werden.

Gemäß einem Ausführungsbeispiel kann die Schraube an einer in dem Isolationskörper angeordneten Stirnseite einen Antrieb zum Drehantreiben der Schraube aufweisen. Insbesondere kann der Antrieb zum Drehantreiben der Schraube durch die Befestigungseinrichtung hindurch betätigbar sein, wenn an der Befestigungseinrichtung kein Anbauteil montiert ist. Mit Vorteil kann der Antrieb an der Stirnseite der Schraube (beispielsweise an einer Stirnseite eines Schraubenkopfs) freiliegen und daher für einen Schraubendreher oder einen Akkuschrauber zugänglich sein, wenn das Anbauteil noch nicht an der Befestigungseinrichtung befestigt ist. Beispielsweise kann ein Benutzer mit einem derartigen Werkzeug in einen hülsenförmigen Isolationskörper eingreifen und dadurch Zugriff auf den Antrieb erhalten, um mit dem Werkzeug durch Ineingriffnahme des Antriebs die Schraube drehanzutreiben. Unter einem Antrieb kann hierbei insbesondere eine Aussparung in der Stirnfläche verstanden werden, die nicht rotationssymmetrisch ist und somit ein Eingreifen eines nicht rotationssymmetrischen Werkzeugkopfs ermöglicht. Beispielsweise kann der Antrieb ein AW-Antrieb, ein Torx-Antrieb, ein Schlitz-Antrieb oder ein Kreuz-Antrieb sein.

Gemäß einem Ausführungsbeispiel kann die Befestigungseinrichtung eine Öffnung in dem Isolationskörper aufweist, die ein Innengewinde zum Montieren des Anbauteils begrenzt. Der hülsenförmige Isolationskörper, dessen Öffnung einen Zugang zu dem Antrieb der Schraube ermöglicht, wenn das Anbauteil noch nicht montiert ist, kann mit Vorteil zum Aufnehmen eines Befestigungselements des Anbauteils verwendet werden, nachdem die Befestigungsvorrichtung in den Verankerungsgrund gesetzt ist. Hierbei kann die Öffnung umfänglich durch ein Innengewinde begrenzt sein, das mit einem Bolzen mit Außengewinde des Anbauteils verschraubbar ist. Auf diese Weise ist eine einfache Montage möglich, wobei die Öffnung synergistisch beim Setzen der Befestigungsvorrichtung in den Verankerungsgrund als Zugang zum Antrieb und nach dem Setzen zum Montieren des Anbauteils verwendet werden kann.

Gemäß einem Ausführungsbeispiel kann ein lokal verbreiterter Kopf der Schraube zugfest in einem Hinterschnitt des Isolationskörpers aufgenommen sein. Anders ausgedrückt können der Kopf der Schraube und der Hinterschnitt des Isolationskörpers formschlüssig miteinander in Eingriff gebracht werden, so dass die Schraube unverlierbar mit dem Isolationskörper verbunden sein kann. Dies erhöht die Fehlerrobustheit des Betriebs und macht eine Fehlbedienung durch einen Benutzer unwahrscheinlich. Ein unerwünschtes Abziehen des Isolationskörpers von der Schraube kann dadurch mechanisch verunmöglicht sein.

Gemäß einem Ausführungsbeispiel kann der Isolationskörper eine Isolationshülse aufweisen oder kann daraus bestehen. Der Isolationskörper kann also hülsenförmig ausgebildet sein. Ein solcher hülsenförmiger Isolationskörper ist in einfacher Weise herstellbar, zum Beispiel durch Spritzgießen. Ein hülsenförmiger Isolationskörper ist sowohl zum Setzen der Befestigungsvorrichtung in einem Verankerungsgrund als auch zum späteren Montieren eines Anbauteils vorteilhaft.

Gemäß einem Ausführungsbeispiel kann die Isolationshülse einen ersten Schalenkörper und einen zweiten Schalenkörper aufweisen, die gemeinsam vollumfänglich die Schraube umschließen. Durch das Vorsehen des Isolationskörpers aus zwei miteinander verbindbaren, zum Beispiel zusammensteckbaren, Schalenkörpern (beispielsweise zwei Halbschalen), ist ein einfaches Anbringen des Isolationskörpers an der Schraube ermöglicht. Gleichzeitig kann die Schraube dadurch in einfacher Weise drehbar, aber in Längsrichtung unverschiebbar an dem Isolationskörper gelagert werden. Beispielsweise kann ein erster Schalenkörper im Bereich eines Schraubenkopfs auf die Schraube aufgesetzt werden und kann nachfolgend der zweite Schalenkörper angesetzt werden, um die Schraube vollumfänglich zu umgeben.

Gemäß einem Ausführungsbeispiel können der erste Schalenkörper und der zweite Schalenkörper selektiv voneinander trennbar und miteinander verbindbar sein. In entsprechender Weise können der erste Schalenkörper und der zweite Schalenkörper wahlweise von der Schraube trennbar und mit der Schraube verbindbar sein. Durch ein trennbares Vorsehen der beiden Schalenkörper aneinander bzw. an der Schraube ist eine einfache Herstellung des Isolationskörpers ermöglicht. Die beiden Schalenkörper können zunächst getrennt voneinander und getrennt von der Schraube gefertigt werden und dann an der Schraube so montiert werden, dass die beiden aneinander befestigten Schalenkörper bei einer Drehung der Schraube nicht mitgedreht werden, aber gegenüber der Schraube in Längsrichtung unverschiebbar gelagert sind. Die beiden Schalenkörper können zum Beispiel mit zueinander korrespondierenden Rastelementen versehen sein, um ein unerwünschtes Lösen des Isolationskörpers von der Schraube zu vermeiden.

Gemäß einem Ausführungsbeispiel können der erste Schalenkörper und der zweite Schalenkörper schwenkfähig miteinander verbunden sein, insbesondere mittels eines Filmscharniers, weiter insbesondere mittels eines mit mindestens einer Kraftübertragungsstruktur verstärkten Filmscharniers. Auf diese Weise kann ein einstückiger Isolationskörper vorgesehen sein, bei dem zwei Schalenkörper relativ zueinander schwenkbar sein können. Einer der Schalenkörper kann (zum Beispiel im Bereich eines Schraubenkopfs) formschlüssig um die Schraube gelegt werden, bevor der andere Schalenkörper durch Schwenken dem zuerst genannten Schalenkörper angenähert werden kann und dann mit ihm verbunden werden kann, um die Schraube umfänglich zu umschließen. Wenn die schwenkfähige Lagerung durch ein Filmscharnier, insbesondere einen dünnen Plastikfilm, realisiert wird, kann ein schwenkfähig ausgebildeter Isolationskörper mittels Spritzgießens hergestellt werden. Um eine Überbelastung des dünnen Filmscharniers zu vermeiden, ist es bei einer solchen Ausgestaltung möglich, eine oder mehrere Kraftübertragungsstrukturen im Bereich des Filmscharniers, insbesondere die beiden Schalenkörper überbrückend, auszubilden, um im Betrieb eine Krafteinwirkung auf solche robusten Kraftübertragungsstrukturen zu konzentrieren und dadurch das Filmscharnier vor einer Überbelastung zu schützen.

Gemäß einem Ausführungsbeispiel kann die Verdrehschutzstruktur eine sich in Setzrichtung erstreckende Verdrehschutzrippe, insbesondere eine Mehrzahl von in Umfangsrichtung verteilt angeordneten und sich in Setzrichtung erstreckenden Verdrehschutzrippen aufweisen. Durch eine solche Verdrehschutzstruktur kann zusätzlich gefördert werden, dass sich der Isolationskörper bei Eindrehen der Schraube nur in Längsrichtung in den Verankerungsgrund hinein bewegt, sich aber nicht mit der Schraube mitdreht.

Gemäß einem Ausführungsbeispiel kann die Schraube eine Metallschraube sein. Beispielsweise kann die Schraube aus Edelstahl hergestellt werden. Dann ist ein Erreichen einer hohen Verankerungskraft in einem Verankerungsgrund ermöglicht. Beispielsweise kann das Setzen einer solchen Metallschraube vorbohrungsfrei oder mit Vorbohrung in dem Verankerungsgrund durchgeführt werden. Die Metallschraube kann wahlweise ohne Dübel (zum Beispiel in einem als Vollkörper ausgebildeten Verankerungsgrund) oder mit Dübel (zum Beispiel in einem als Hohlkörper ausgebildeten Verankerungsgrund) eingesetzt werden. Obwohl Metallschrauben eine hohe Wärmeleitfähigkeit haben, stellt dies im Rahmen von Ausführungsbeispielen der Erfindung kein Problem dar, da die thermische Isolation zwischen einem Inneren und einem Äußeren des Verankerungsgrunds durch den thermisch isolierenden Isolationskörper bewerkstelligt werden kann.

Gemäß einem Ausführungsbeispiel kann der Isolationskörper ein Kunststoffkörper sein. Wenn der Isolationskörper aus Kunststoff hergestellt ist, kann eine thermische Isolation mit einfachen Mitteln erreicht werden. Ein solcher Kunststoffkörper kann außerdem in kostengünstiger Weise mittels Spritzgießens oder dergleichen hergestellt werden.

Gemäß einem Ausführungsbeispiel kann der Verankerungsgrund eine Wand und eine darauf angebrachte thermisch isolierende Dämmschicht aufweisen. Die Wand kann mechanisch robust ausgebildet sein, so dass bei Setzen der Schraube in der Wand eine feste und stabile Verankerung der Befestigungsvorrichtung an dem Verankerungsgrund erreicht ist. Die Dämmschicht kann aus einem thermisch isolierenden Material hergestellt sein, beispielsweise ein Wärmeverbundsystem sein, um eine thermische Entkopplung zwischen einem Äußeren des Verankerungsgrunds und einem Inneren des Verankerungsgrunds zu bewerkstelligen bzw. das Innere und das Äußere des Verankerungsgrunds voneinander thermisch zu isolieren. Die Schraube kann zumindest teilweise in die Wand gesetzt sein, wohingegen der Isolationskörper zumindest teilweise in die Dämmschicht gesetzt werden kann.

Gemäß einem Ausführungsbeispiel können eine Spitze und ein sich daran anschließender Schaftabschnitt der Schraube in der Wand verankert sein und ein von der Spitze abgewandter anderer Schaftabschnitt der Schraube und zumindest ein Teil des Isolationskörpers in der Dämmschicht angeordnet sein. In dieser Konfiguration ist sowohl ein mechanisch festes Setzen der Befestigungsvorrichtung an dem Verankerungsgrund ermöglicht (indem die Schraube in die Wand eingebracht wird), als auch ein Wärmeentkoppeln über die Dicke des Verankerungsgrunds hinweg (da der thermisch isolierende Isolationskörper in der Dämmschicht verankert wird und daher eine unerwünschte Wärmebrücke zwischen der Wand und einem Äußeren des Verankerungsgrunds unterbindet).

Gemäß einem Ausführungsbeispiel kann die Wand eine Steinwand, eine Holzwand oder eine Metallwand sein. Derartige Wände haben eine ausreichende Stabilität, um eine feste Verankerung der Schraube in einer solchen Wand zu ermöglichen. Beispielsweise kann die Wand eine Ziegelwand oder eine Betonwand sein, beispielsweise aus Vollstein oder Hohlkammerstein, Beton oder Porenbeton, etc.

Gemäß einem Ausführungsbeispiel kann der Verankerungsgrund auf der Dämmschicht eine Putzschicht aufweisen, in und/oder auf der zumindest ein Teil des Isolationskörpers angeordnet sein. Ist die Dämmschicht verputzt, kann der Isolationskörper ganz oder teilweise in der Putzschicht angeordnet sein. Auch dadurch wird keine Wärmebrücke durch die Befestigungsvorrichtung entlang einer Dickenrichtung des Verankerungsgrunds zugelassen.

Gemäß einem Ausführungsbeispiel kann das Anbauteil eine Masse in einem Bereich zwischen 10 kg und 50 kg haben. Beispielsweise können Ausführungsbeispiele der Erfindung eingesetzt werden, um eine Lampe oder einen Briefkasten an einem Gebäudeäußeren ohne die Gefahr von Wärmeverlusten oder Beschädigungen anzubringen. Auch die Montage eines Waschbeckens oder anderer Sanitärartikel mittels einer erfindungsgemäßen Befestigungsvorrichtung ist möglich.

Gemäß einem Ausführungsbeispiel kann das Verfahren ein Eindrehen der Schraube in den Verankerungsgrund und ein gleichzeitiges drehfreies Längssetzen des Isolationskörpers in den Verankerungsgrund aufweisen. Mit anderen Worten folgt der Isolationskörper einer Axialverschiebungskomponente der Schraube beim Setzen, dreht sich aber mit der Schraube beim Setzen nicht mit. Dies kann, über das drehbare Lagern des Isolationskörpers relativ zu der Schraube hinaus, auch durch das Vorsehen von einer oder mehreren Verdrehschutzrippen in einer äußeren Mantelfläche des Isolationskörpers gefördert werden.

Gemäß einem Ausführungsbeispiel kann das Verfahren ein Einbringen der Schraube teils in eine Wand und teils in eine Dämmschicht des Verankerungsgrunds und ein Einbringen des Isolationskörpers in die Dämmschicht aufweisen. Dadurch ist eine Verankerung der Befestigungsvorrichtung an dem Verankerungsgrund mit hoher Auszugskraft und gleichzeitig eine zuverlässige thermische Isolation ermöglicht.

Gemäß einem Ausführungsbeispiel kann das Verfahren ein Einbringen eines Dübels in den Verankerungsgrund und nachfolgend ein Einbringen der Schraube in den Dübel aufweisen. Beispielsweise kann durch einen solchen Dübel, der vor Eindrehen der Schraube in eine Wand des Verankerungsgrunds eingesetzt werden kann, eine hohe Auszugskraft selbst dann erreicht werden, wenn die Wand eine Hohlwand ist. Beispielsweise kann die Wand aus Leichtbeton oder Hohlziegeln gebildet sein. Wird ein Dübel (beispielsweise ein Kunststoffdübel) in einem Loch der Wand eingesetzt, bevor die Schraube in den Dübel in dem Loch eingeführt wird, kann der Dübel der Schraube zusätzlichen seitlichen Griff verleihen.

Gemäß einem Ausführungsbeispiel kann das Verfahren ein Befestigen des Anbauteils mittels Einführens eines Dübels in die freiliegende Befestigungseinrichtung und mittels nachfolgenden Einführens eines Schraubenabschnitts des Anbauteils in den Dübel aufweisen. Wenn beispielsweise ein Durchmesser eines Bolzenabschnitts des Anbauteils, an dem die Befestigung erfolgen soll, kleiner als ein Durchmesser einer Aufnahmeöffnung der Befestigungseinrichtung des Isolationskörpers ist, kann ein kurzer Dübel in eine die Befestigungseinrichtung definierende Öffnung des Isolationskörpers eingesetzt werden, um eine Größenanpassung durchzuführen. Danach kann der Schraubenabschnitt bzw. Bolzenabschnitt des Anbauteils in den Dübel in dem Isolationskörper eingesetzt werden.

Gemäß einem Ausführungsbeispiel kann das Verfahren ein dübelfreies, insbesondere vorbohrungsfreies Einbringen der Schraube in den Verankerungsgrund aufweisen. Ohne Dübel und sogar ohne Vorbohrung kann die Befestigungsvorrichtung beispielsweise in einem als Vollkörper ausgebildeten Untergrund gesetzt werden, beispielsweise in Vollbeton. Bei Verwendung von Hohlziegeln oder anderen Hohlkörpern als Wand eines Verankerungsgrunds kann ein Setzen der Befestigungsvorrichtung in dem Verankerungsgrund mit Dübel erfolgen. Wahlweise kann das Setzen der Befestigungsvorrichtung in dem Verankerungsgrund, insbesondere in einer massiven Wand desselben, mit oder ohne Vorbohrung erfolgen.

Gemäß einem Ausführungsbeispiel kann das Verfahren ein Herstellen des Isolationskörpers separat von der Schraube und ein nachfolgendes Anbringen des Isolationskörpers an der Schraube aufweisen. Beispielsweise kann der ein- oder mehrstückige Isolationskörper mittels Spritzgießens hergestellt werden. Danach kann der fertig hergestellte (einstückige oder mehrstückige) Isolationskörper an der Schraube angebracht werden.

Gemäß einem Ausführungsbeispiel kann das Verfahren ein Herstellen des Isolationskörpers direkt auf der Schraube aufweisen. Gemäß einer solchen Ausgestaltung kann die Schraube unmittelbar mit dem Isolationskörper überspritzt werden, was ein besonders einfaches Herstellen ermöglicht. Hierbei ist jedoch Sorge dafür zu tragen, dass ungeachtet des Überspritzens der Schraube mit dem Isolationskörper eine Drehentkopplung zwischen Schraube und Isolationskörper sichergestellt wird.

Im Folgenden werden exemplarische Ausführungsbeispiele der vorliegenden Erfindung mit Verweis auf die folgenden Figuren detailliert beschrieben.
Figur 1 zeigt eine dreidimensionale Ansicht einer Befestigungsvorrichtung zum Befestigen eines Anbauteils an einem Verankerungsgrund gemäß einem exemplarischen Ausführungsbeispiel der Erfindung.
Figur 2 zeigt ein Detail eines thermisch isolierenden Isolationskörpers der Befestigungsvorrichtung gemäß Figur 1.
Figur 3 zeigt eine Querschnittsansicht eines Abschnitts der Befestigungsvorrichtung gemäß Figur 1.
Figur 4 zeigt eine dreidimensionale Ansicht eines Abschnitts der Befestigungsvorrichtung gemäß Figur 1 während der Montage eines thermisch isolierenden Isolationskörpers an einer Schraube.
Figur 5 zeigt eine Montageanordnung mit einem Anbauteil, einem Verankerungsgrund und einer Befestigungsvorrichtung gemäß einem exemplarischen Ausführungsbeispiel der Erfindung im montierten Zustand.
Figur 6 zeigt eine Montageanordnung mit einem Anbauteil, einem Verankerungsgrund und einer Befestigungsvorrichtung sowie zwei Dübeln gemäß einem anderen exemplarischen Ausführungsbeispiel der Erfindung im montierten Zustand.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden.

Gemäß einem exemplarischen Ausführungsbeispiel der Erfindung ist eine Befestigungsvorrichtung geschaffen, die aus einer Metallschraube und einem beispielsweise aus Kunststoff ausgebildeten hülsenförmigen thermisch isolierenden Isolationskörper aufgebaut ist. Letzterer ist an der Schraube drehbar, aber (insbesondere in Längs- bzw. Axialrichtung) verschiebegesichert gelagert. Beim Setzen einer solchen Befestigungsvorrichtung in einen Verankerungsgrund kann sich die Schraube unter Ausbilden einer hohen Auszugskraft in einer massiven Wand des Verankerungsgrunds verankern. Der thermisch isolierende Isolationskörper hingegen kann in eine thermisch isolierende Dämmschicht des Verankerungsgrunds eingezogen werden. Beim drehenden Einbringen der Schraube folgt der Isolationskörper der Bewegung der Schraube nur in Axialrichtung, dreht sich mit der Schraube aber nicht mit, so dass auch keine Schädigung des Untergrunds erfolgt. Auf diese Weise ist ein festes Verankern der Befestigungsvorrichtung in einem Verankerungsgrund zum nachfolgenden Anbringen eines Anbauteils an einer Befestigungseinrichtung der Befestigungsvorrichtung ermöglicht, ohne dass störende Wärmebrücken entstehen. Ein Taupunkt kann dadurch beispielsweise an eine Außenseite eines Gebäudes verschoben werden. Kämme, Stege oder andere Verdrehschutzstrukturen des Isolationskörpers können ein Mitdrehen desselben beim drehenden Einbringen der Schraube in den Verankerungsgrund zusätzlich unterbinden. Der Kunststoffkörper wird also drehfrei in den Verankerungsgrund eingezogen. Dann kann eine Lampe oder ein anderes Anbauteil in ein Innengewinde als Befestigungseinrichtung des Isolationskörpers angeschraubt werden, etc. Die Schraube, die beispielsweise eine AMO-Schraube der Anmelderin Würth sein kann, kann beispielsweise in eine Wand (aus Stein) eingebracht werden. Der Schaft der Schraube kann dann beispielsweise teilweise in eine Wärmedämmung eindringen. Die Vorderseite der Schraube kann mit dem als Kunststoffkörper ausgebildeten thermischen Isolationskörper bestückt sein, der Wärmebrücken zwischen außen und innen unterbricht. Eine durch die Drehbarkeit des Isolationskörpers unterbundene stoffschlüssige Verbindung mit der Schraube überträgt mit Vorteil keine Drehbewegung der Schraube auch auf das Kunststoffelement. Bevorzugt ist der beispielsweise als Kunststoffelement ausgebildete Isolationskörper auf der Schraube (insbesondere eine AMO-Schraube) drehbar und nur in Längs- und Querrichtung fest gelagert. Hierdurch kann der Isolationskörper durch das Einschrauben der Schraube nur in den Putz und in den Dämmstoff eingezogen werden. Insbesondere kann ebenfalls ermöglicht sein, dass gleichzeitig Haltenasen mit größerem Durchmesser eingezogen werden.

Gemäß exemplarischen Ausführungsbeispielen der Erfindung ist eine einfache und schnelle Montage, eine wenig aufwendige Herstellbarkeit und das Vorsehen nur einer einzigen Befestigungsvorrichtung für alle Dämmstoffdicken möglich. Eine in einen Verankerungsgrund gesetzte Befestigungsvorrichtung gemäß einem exemplarischen Ausführungsbeispiel der Erfindung gewährleistet eine langfristige Sicherung im Putz und Dämmstoff gegen Mitdrehen des insbesondere als Kunststoffelement ausgebildeten Isolationskörpers.

Gemäß einem Ausführungsbeispiel kann ein als Kunststoffelement ausgebildeter Isolationskörper jeweils halbschalig auf eine (beispielsweise AMO-) Schraube gesteckt werden. Geringe Querkräfte in diesem System können durch ausreichend stark ausgebildete Clips übertragen werden. Die Schraube kann direkt ohne Dübel in den Untergrund geschraubt werden. Der durchgehend gleiche Durchmesser von Kern und Gewinde ermöglicht es, dass mit einer langen Schraube alle gängigen Dämmstoffdicken überbrückt werden können. Die überschüssige Schraubenlänge verschwindet im Untergrund bzw. trägt zu einer weiter verbesserten Lastübertragung bei.

Zwei Schalenkörper (zum Beispiel Halbschalen) des Isolationskörpers können beispielsweise über ein Filmscharnier miteinander verbunden werden. An der Seite der Filmscharniere können insbesondere zusätzlich Nasen vorgesehen sein, welche sich ineinander verhaken, um die Kraftübertragung nicht über das Filmscharnier zu bewerkstelligen.

Beispielsweise können zur Montage eines mit zwei Schalenkörpern realisierten Isolationskörpers zwei zusammenhängende Teile auseinandergezogen werden und dann über der Schraube zusammengesteckt werden.

Gemäß einem Ausführungsbeispiel ist auch möglich, die beiden Halbschalen bzw. Schalenkörper ineinander zu schieben.

Alternativ kann ein als Kunststoffelement ausgebildeter Isolationskörper auch direkt auf dem Schraubenschaft gebildet werden, wobei Isolationskörper und Schraube voneinander drehentkoppelt sein sollen.

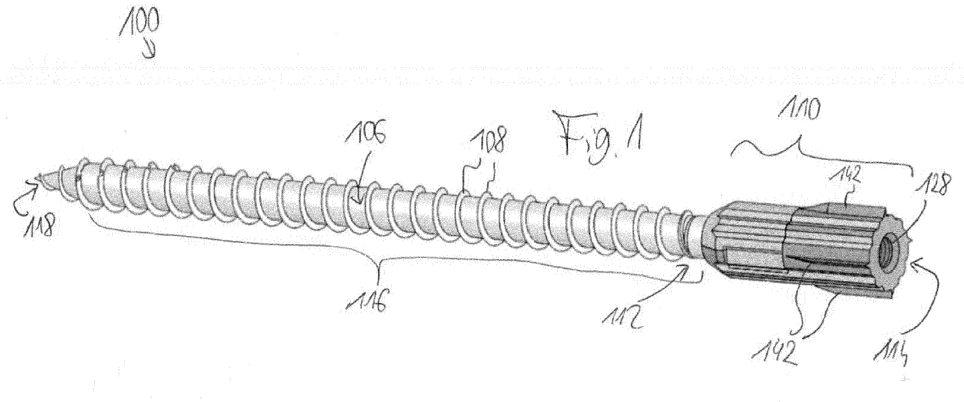

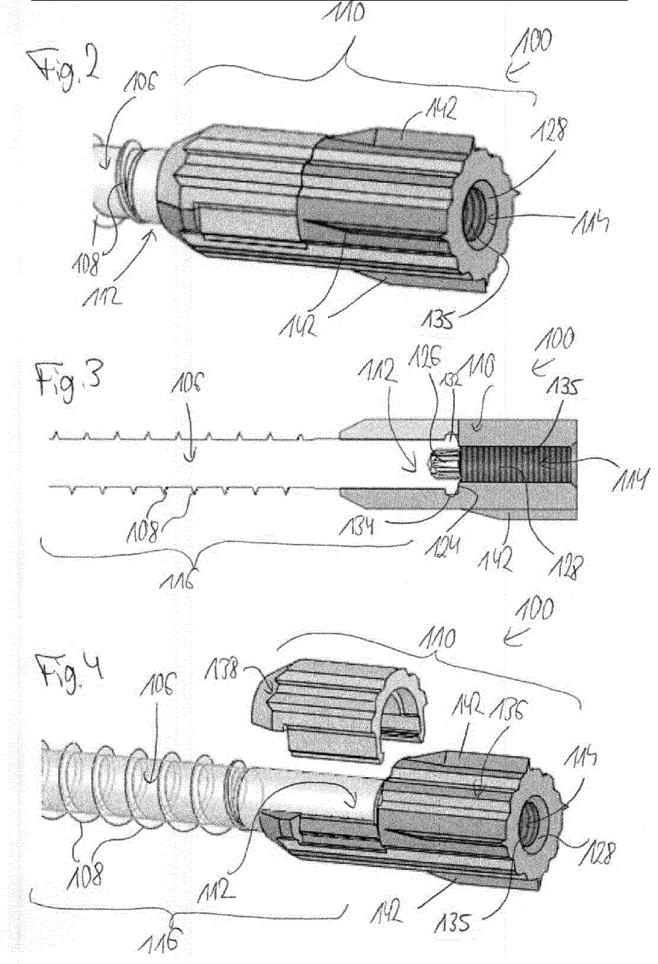

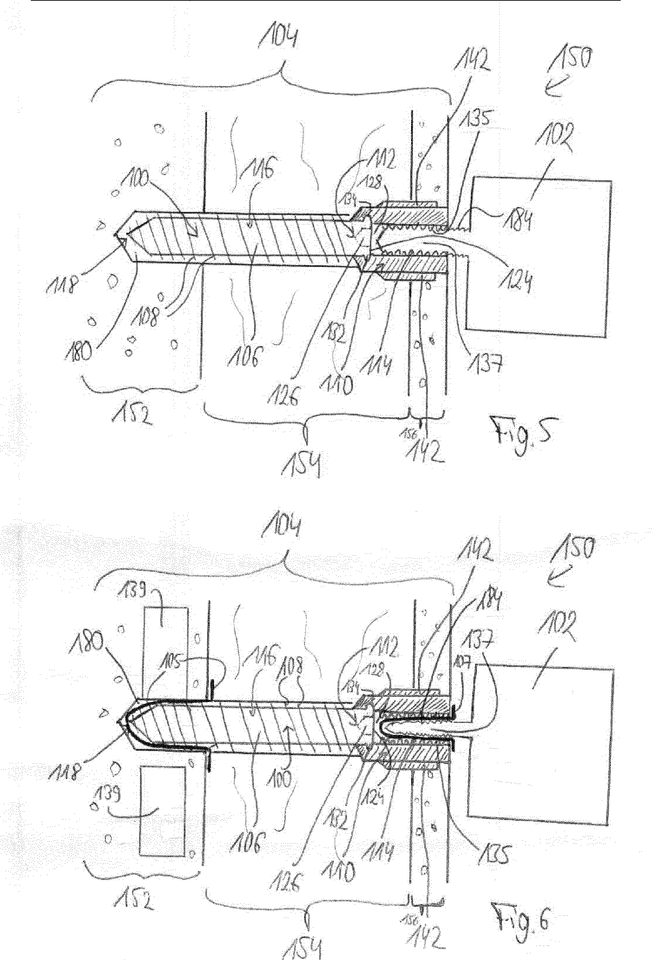

**Figur 1** zeigt eine dreidimensionale Ansicht einer Befestigungsvorrichtung 100 zum Befestigen eines Anbauteils 102 an einem Verankerungsgrund 104 (vergleiche Figur 5 und Figur 6) gemäß einem exemplarischen Ausführungsbeispiel der Erfindung. **Figur 2** zeigt ein Detail eines thermisch isolierenden Isolationskörpers 110 der Befestigungsvorrichtung 100 gemäß Figur 1. **Figur 3** zeigt eine Querschnittsansicht eines Abschnitts der Befestigungsvorrichtung 100 gemäß Figur 1 und Figur 2. **Figur 4** zeigt eine dreidimensionale Ansicht eines Abschnitts der Befestigungsvorrichtung 100 gemäß Figur 1 während der Montage des hier zweistückig ausgebildeten thermisch isolierenden Isolationskörpers 110 an einer Schraube 106.

Figur 1 bis 4 zeigt in unterschiedlichen Darstellungen eine einstückig handhabbare Befestigungsvorrichtung 100 zum Befestigen eines Anbauteils 102 (zum Beispiel eine Lampe) an einem Verankerungsgrund 104 (beispielsweise einer mit einer Dämmschicht 154 und optional einer Putzschicht 156 versehenen Wand 152, vergleiche Figur 5 und Figur 6). Die beiden Komponenten der Befestigungsvorrichtung 100 sind eine beispielsweise aus Edelstahl hergestellte Schraube 106, die in dem dargestellten Ausführungsbeispiel entlang ihres gesamten Schafts 116 mit einem Außengewinde 108 versehen ist, und ein thermisch isolierender Isolationskörper 110. Der aus Kunststoff hergestellte hülsenförmige bzw. manschettenartige Isolationskörper 110 ist auf einem kopfseitigen Endabschnitt 112 der Schraube 106 gegenüber der Schraube 106 drehbar und gegenüber der Schraube 106 längsverschiebegesichert angebracht. Genauer gesagt ist der Isolationskörper 110 auf der Schraube 106 nur in Längsrichtung (entsprechend einer horizontalen Richtung gemäß Figur 1) und Querrichtung (entsprechend einer zu der horizontalen Richtung gemäß Figur 1 orthogonalen Richtung) fest gelagert, in Umfangsrichtung jedoch drehfähig relativ zur Schraube 106. In einem von der Schraube 106 abgewandten und freien Bereich weist der Isolationskörper 110 eine Befestigungseinrichtung 114 zum Montieren des Anbauteils 102 auf. Die Befestigungseinrichtung 114 ist zum Montieren des Anbauteils 102 zugänglich, wenn die Schraube 106 in dem Verankerungsgrund 104 verankert ist (wie beispielsweise in Figur 5 dargestellt).

Die Schraube 106 hat an einer in dem Isolationskörper 110 angeordneten Stirnseite 124 eines Schraubenkopfs 132 einen zum Beispiel als Kreuzschlitz, Torx-Antrieb oder AW-Antrieb ausgebildeten Antrieb 126. Durch Eingreifen eines geeigneten Drehwerkzeugs (beispielsweise ein Schraubendreher oder ein Akkuschrauber) in den Antrieb 126 kann die Schraube 106 in Rotation versetzt werden, wenn das Drehwerkzeug gedreht wird. Mit Vorteil ist der Antrieb 126 zum Drehantreiben der Schraube 106 durch die Befestigungseinrichtung 114 hindurch betätigbar, wenn an der Befestigungseinrichtung 114 kein Anbauteil montiert ist. Das Werkzeug kann dann einfach durch eine Öffnung 128 der Befestigungseinrichtung 114 des Isolationskörpers 110 hindurch geführt werden und drehend in den Antrieb 126 eingreifen. Somit weist die Befestigungseinrichtung 114 eine Öffnung 128 in dem Isolationskörper 110 auf, die ein Innengewinde 135 zum Montieren des Anbauteils 102 begrenzt. Am besten in Figur 3 zu erkennen ist, dass der lokal verbreiterte Schraubenkopf 132 der Schraube 106 zugfest in einem Hinterschnitt 134 im Inneren des Isolationskörpers 110 aufgenommen ist. Dadurch ist der Isolationskörper 110 unverlierbar an der Schraube 106 montiert.

Figur 4 zeigt, dass der Isolationskörper 110 aus einem ersten Schalenkörper 136 und einem zweiten Schalenkörper 138 aufgebaut ist. Die Schalenkörper 136, 138 umschließen im montierten Zustand gemeinsam vollumfänglich die Schraube 106. Aus Figur 2 und Figur 4 ist ferner entnehmbar, dass der erste Schalenkörper 136 und der zweite Schalenkörper 138 wahlweise voneinander trennbar (siehe Figur 4) und miteinander verbindbar (siehe Figur 2) sind. Zum Herstellen der Befestigungsvorrichtung 100 gemäß Figur 1 bis Figur 4 können die Schalenkörper 136, 138 des Isolationskörpers 110 zunächst separat voneinander und separat von der Schraube 106 hergestellt werden. Danach kann der Isolationskörper 110 in Form der beiden Schalenkörper 136, 138 an der Schraube 106 in einer Weise angebracht werden, wie dies beispielsweise in Figur 4 dargestellt ist.

Vorteilhaft ist der Isolationskörper 110 an seiner Außenseite mit einer Verdrehschutzstruktur 142 versehen. Diese ist gemäß Figur 1 bis Figur 4 durch eine Mehrzahl von in Umfangsrichtung verteilt angeordneten und sich in Setzrichtung bzw. Axialrichtung der Schraube 106 erstreckende Verdrehschutzrippen ausgebildet. Die Verdrehschutzstruktur 142 schneidet sich beim Setzen der Befestigungsvorrichtung 100 in die Dämmschicht 154 (bzw. die Putzschicht 156) des Verankerungsgrunds 104 ein und vollführt dabei eine im Wesentlichen reine Längsbewegung. Ein Mitdrehen der Isolationsstruktur 110 mit der drehenden Schraube 106 verhindert somit auch zusätzlich die Verdrehschutzstruktur 142.

Wie am besten in Figur 1 zu erkennen, ist die Schraube 106 durchgehend zwischen einer konischen Spitze 118 und dem Schraubenkopf 132 mit einem helikalen Außengewinde 108 versehen. Dies kann beispielsweise als selbstschneidendes Gewinde ausgebildet werden und kann daher selbstschneidend und vorzugsweise vorbohrungsfrei in einem Untergrund wie Holz eingedreht werden. Hierfür greift ein Schraubendreher oder Akkuschrauber (nicht gezeigt) durch die Öffnung 128 hindurch in den Antrieb 126 im Schraubenkopf 132 an. Durch Drehantreiben der Schraube 106 kann diese dann in den Verankerungsgrund 104 eingedreht werden. Indem die Schraube 106 über im Wesentlichen den gesamten Schaftbereich 116 mit dem Außengewinde 108 versehen ist, kann die Schraube 106 für ganz unterschiedliche Dicken von Dämmschichten 154 eines Verankerungsgrunds 104 eingesetzt werden.

Alternativ zu einem vorbohrungsfreien und/oder selbstschneidenden Betrieb kann die Schraube 106 in einen Verankerungsgrund 104 auch mit Vorbohrung, und optional mit vorgefertigtem Gewinde in der Vorbohrung, gesetzt werden.

Wie am besten in Figur 2, Figur 3 und Figur 4 zu erkennen ist, ist der als Kunststoffkörper ausgebildete Isolationskörper 110 im Bereich des Schraubenkopfs 132 auf die Schraube 106 aufgesetzt. Dies kann, siehe Figur 4, zum Beispiel durch das Aufsetzen des ersten Schalenkörpers 136 auf die Schraube 106 im Bereich ihres Kopfs 132 erfolgen, gefolgt von einem Aufstecken des zweiten Schalenkörpers 138 unter Ausbilden einer mechanischen Verbindung zwischen den beiden Schalenkörpern 136, 138. Zum Setzen der Befestigungsvorrichtung 100 greift der Schraubendreher oder Akkuschrauber dann durch die Öffnung 128 in den Antrieb 126 im Schraubenkopf 132 ein und setzt die Schraube 106 drehend in den Verankerungsgrund 104. Aufgrund der drehfähigen, aber axial unverschieblichen Lagerung des Isolationskörpers 110 in Bezug auf die Schraube 106 dreht sich der Isolationskörper 110 beim drehenden Einbringen der Schraube 106 nicht mit, folgt aber deren Axialverschiebung. Dadurch wird beim Setzen der Schraube 106 in den Verankerungsgrund 104 auch der Isolationskörper 110 gesetzt, vorzugsweise in die Dämmschicht 154. Ein Mitdrehen des Isolationskörpers 110 wird auch durch die Verdrehschutzstrukturen 142, die gemäß Figur 1 bis Figur 4 als Längsrippen an einer Mantelfläche des hülsenförmigen Isolationskörpers 110 ausgebildet sind, gehemmt. Ist die Schraube 106 in der beschriebenen Weise gesetzt worden, kann nachfolgend ein Bolzen mit Außengewinde eines Anbauteils 102 an der Befestigungseinrichtung 114 angebracht werden. Hierfür kann das Innengewinde 135 der Befestigungseinrichtung 114 in der Öffnung 128 mit dem Außengewinde des Bolzens des Anbauteils 102 verschraubt werden.

**Figur 5** zeigt eine Montageanordnung 150 mit einem Anbauteil 102, einem Verankerungsgrund 104 und einer Befestigungsvorrichtung 100 gemäß einem exemplarischen Ausführungsbeispiel der Erfindung im montierten Zustand. Die Befestigungsvorrichtung 100 kann zum Beispiel ausgebildet sein, wie dies in Figur 1 bis Figur 4 dargestellt ist.

Gemäß Figur 5 ist die Schraube 106 der Befestigungsvorrichtung 100 in dem Verankerungsgrund 104 eingebracht. Ferner ist gemäß Figur 5 das Anbauteil 102 an der freiliegenden Befestigungseinrichtung 114 des Isolationskörpers 110 montiert. Wie in Figur 5 zu erkennen, weist der Verankerungsgrund 104 eine vertikale Wand 152 und eine darauf angebrachte thermisch isolierende Dämmschicht 154 auf. Beispielsweise kann die Dämmschicht 154 aus Styropor oder Steinwolle gebildet sein und eine Dicke in einem Bereich zwischen 5 cm und 10 cm haben. Die Wand 152 kann zum Beispiel eine Steinwand sein. Zudem ist auf der Dämmschicht 154 eine Putzschicht 156 gebildet, in der ein Teil des Isolationskörpers 110 angeordnet ist. Eine Dicke der Putzschicht 156 kann zum Beispiel 3 mm bis 10 mm betragen, insbesondere zwischen 5 mm und 6 mm.

Eine Spitze 118 und ein sich daran anschließender Schaftabschnitt 116 der Schraube 106 sind gemäß Figur 5 in der Wand 152 verankert, wodurch die eigentliche Befestigung bewerkstelligt wird. Ferner sind ein von der Spitze 118 abgewandter anderer Schaftabschnitt 116 der Schraube 106 und ein jeweiliger Teil des Isolationskörpers 110 in der Dämmschicht 154 bzw. in der Putzschicht 156 angeordnet.

Die Befestigungsvorrichtung 100 eignet sich gut für die Befestigung mittelgroßer Lasten. Beispielsweise kann das Anbauteil 102 eine Masse in einem Bereich zwischen ungefähr 10 kg und ungefähr 50 kg haben.

Zum Montieren des Anbauteils 102 an dem Verankerungsgrund 104 wird zunächst die Schraube 106 der Befestigungsvorrichtung 100 in dem Verankerungsgrund 104 verankert, insbesondere zum Teil in der Wand 152. Dies erfolgt mit Vorteil derart, dass die Befestigungseinrichtung 114 des Isolationskörpers 110 freiliegt, nach dem ein Setzwerkzeug aus dem Antrieb 126 entnommen worden ist. Danach wird ein mit einem Außengewinde versehener Bolzen- oder Schraubenabschnitt 137 des Anbauteils 102 an der freiliegenden Befestigungseinrichtung 114 montiert. Ein Eindrehen der Schraube 106 in den Verankerungsgrund 104 führt aufgrund der oben beschriebenen Konfiguration der Befestigungsanordnung 100 zu einem gleichzeitigen drehfreien Längssetzen des Isolationskörpers 110 in den Verankerungsgrund 104, genauer gesagt in die Dämmschicht 154 und optional in die Putzschicht 156. Der Setzvorgang kann zum Beispiel ohne Dübel erfolgen. Das Setzen kann mit oder ohne Vorbohrung durchgeführt werden.

Figur 5 zeigt die Montageanordnung 150 in einem montierten Zustand. Wie dargestellt, weist der Verankerungsgrund 104 in seinem Inneren die Wand 152 auf, zum Beispiel eine Stein- oder Betonwand. In diese kann ein Loch 180 vorgebohrt werden. Dies ist allerdings optional. Auf der Wand 152 ist eine thermisch isolierende Dämmschicht 154 angebracht, beispielsweise eine Wärmeverbundstruktur. Diese soll ein Inneres und ein Äußeres des Gebäudes dämmen und thermisch voneinander entkoppeln.

Nach Bohren des Lochs 180 in der in Figur 5 dargestellten Weise kann ein Schraubendreher oder Akkuschrauber (nicht gezeigt) durch die Öffnung 128 in den Antrieb 126 des Schraubenkopfs 132 der Schraube 106 eingeführt werden. Die Schraube 106 kann dann in den Verankerungsgrund 104 eingedreht werden. Hierbei bildet das Außengewinde 108 insbesondere im Bereich der Wand 152 eine Verbindung mit hoher Befestigungskraft und hoher Auszugskraft aus. Beim drehenden Einbringen der Schraube 106 in den Verankerungsgrund 104 wird der Isolationskörper 110 nicht mitgedreht, bewegt sich aber axial in den Verankerungsgrund 104 hinein. Der Isolationskörper 110 befindet sich im gesetzten Zustand teilweise in der Dämmschicht 154 und teilweise in der optionalen Putzschicht 156. Der thermische Isolationskörper 110 unterbindet daher eine unerwünschte Wärmebrücke zwischen einem Inneren und einem Äußeren des Gebäudes, das durch die Vertikalwand in Form des Verankerungsgrunds 104 begrenzt wird. Nach dem beschriebenen Setzvorgang kann das in Figur 5 schematisch dargestellte Anbauteil 102 an der gesetzten Befestigungsvorrichtung 100 und daher an dem Verankerungsgrund 104 angebracht werden, indem ein Schraubenabschnitt 137 mit Außengewinde 184 des Anbauteils 102 mit dem Innengewinde 135 in der Öffnung 128 des hülsenförmigen Isolationskörpers 110 verschraubt wird.

**Figur 6** zeigt eine Montageanordnung 150 mit einem Anbauteil 102, einem Verankerungsgrund 104 und einer Befestigungsvorrichtung 100 sowie mit zwei Dübeln 105, 107 (vorzugsweise aus Kunststoff) gemäß einem anderen exemplarischen Ausführungsbeispiel der Erfindung im montierten Zustand.

Die Montageanordnung 150 gemäß Figur 6 unterscheidet sich von der Montageanordnung 150 gemäß Figur 5 insbesondere dadurch, dass die Wand 152 makroskopische Hohlräume 139 aufweist. Beispielsweise kann die Wand 152 durch Hohlziegel oder Hohlbeton aufgebaut sein. Um ungeachtet der Hohlräume 139 eine zuverlässige Verankerung der Schraube 106 in dem Verankerungsgrund 104 sicherzustellen, kann nach Bilden eines Bohrlochs 180 in dem Verankerungsgrund 104 zunächst ein Dübel 105 (zum Beispiel ein Kunststoffdübel) in den Verankerungsgrund 104 eingesetzt werden. Nachfolgend kann dann die Schraube 106 in den Dübel 105 eingedreht werden. Ein weiterer Unterschied des Ausführungsbeispiels gemäß Figur 6 verglichen mit dem Ausführungsbeispiel gemäß Figur 5 besteht darin, dass zum Befestigen des Anbauteils 102 an der Befestigungseinrichtung 114 zunächst ein kurzer Dübel 107 (zum Beispiel ein Kunststoffdübel) in die freiliegende Öffnung 128 der Befestigungseinrichtung 114 eingesetzt werden kann. Danach kann mittels nachfolgenden Eindrehens eines Schraubenabschnitts oder Bolzenabschnitts 137 des Anbauteils 102 in den Dübel 107 eine Befestigung des Anbauteils 102 an der Befestigungsvorrichtung 100 und daher an dem Verankerungsgrund 104 bewerkstelligt werden. Durch den Dübel 107 kann beispielsweise eine Anpassung der Öffnungsgröße der Befestigungseinrichtung 114 an die Größe eines Bolzen- oder Schraubenabschnitts 137 erfolgen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Befestigungsvorrichtung (100) zum Befestigen eines Anbauteils (102) an einem Verankerungsgrund (104), wobei die Befestigungsvorrichtung (100) aufweist:
eine Schraube (106), die zumindest abschnittsweise mit einem Außengewinde (108) zum Eindrehen in den Verankerungsgrund (104) versehen ist; und
einen thermisch isolierenden Isolationskörper (110), der auf einem Endabschnitt (112) der Schraube (106) und gegenüber der Schraube (106) drehbar und verschiebegesichert angebracht ist und eine Befestigungseinrichtung (114) zum Befestigen des Anbauteils (102) aufweist, wenn die Schraube (106) in dem Verankerungsgrund (104) verankert ist, und
wobei der Isolationskörper (110) an seiner Außenseite eine Verdrehschutzstruktur (142) aufweist.

2. Befestigungsvorrichtung (100) gemäß Anspruch 1, aufweisend zumindest eines der folgenden Merkmale:
wobei der Isolationskörper (110) auf der Schraube (106) in Längsrichtung und Querrichtung fest gelagert ist;
wobei im Wesentlichen ein gesamter Schaft (116) der Schraube (106) mit dem Außengewinde (108) versehen ist;
wobei die Schraube (106) an einer in dem Isolationskörper (110) angeordneten Stirnseite (124) einen Antrieb (126) zum Drehantreiben der Schraube (106) aufweist, wobei insbesondere der Antrieb (126) zum Drehantreiben der Schraube (106) durch einen Teil der Befestigungseinrichtung (114) hindurch betätigbar ist, wenn an der Befestigungseinrichtung (114) kein Anbauteil (102) montiert ist;
wobei die Befestigungseinrichtung (114) eine Öffnung (128) in dem Isolationskörper (110) aufweist, durch die ein Innengewinde (130) zum Montieren des Anbauteils (102) begrenzt wird;
wobei ein aufgeweiterter Kopf (132) der Schraube (106) zugfest in einem Hinterschnitt (134) des Isolationskörpers (110) aufgenommen ist.

3. Befestigungsvorrichtung (100) gemäß einem der Ansprüche 1 bis 2, wobei der Isolationskörper (110) eine Isolationshülse aufweist.

4. Befestigungsvorrichtung (100) gemäß Anspruch 3, wobei die Isolationshülse einen ersten Schalenkörper (136) und einen zweiten Schalenkörper (138) aufweist, die gemeinsam vollumfänglich die Schraube (106) umschließen.

5. Befestigungsvorrichtung (100) gemäß Anspruch 4, aufweisend zumindest eines der folgenden Merkmale:
wobei der erste Schalenkörper (136) und der zweite Schalenkörper (138) wahlweise voneinander trennbar oder miteinander verbindbar sind;
wobei der erste Schalenkörper (136) und der zweite Schalenkörper (138) wahlweise von der Schraube (106) trennbar und mit der Schraube (106) verbindbar sind.

6. Befestigungsvorrichtung (100) gemäß Anspruch 4 oder 5, wobei der erste Schalenkörper (136) und der zweite Schalenkörper (138) schwenkfähig miteinander verbunden sind, insbesondere mittels eines Filmscharniers.

7. Befestigungsvorrichtung (100) gemäß einem der Ansprüche 1 bis 6, aufweisend zumindest eines der folgenden Merkmale:
wobei die Verdrehschutzstruktur (142) eine sich in Setzrichtung erstreckende Verdrehschutzrippe, insbesondere eine Mehrzahl von in Umfangsrichtung verteilt angeordnete und sich in Setzrichtung erstreckende Verdrehschutzrippen, aufweist;
wobei die Schraube (106) eine Metallschraube ist; wobei der Isolationskörper (110) ein Kunststoffkörper ist.

8. Montageanordnung (150), aufweisend:
eine Befestigungsvorrichtung (100) gemäß einem der Ansprüche 1 bis 7;
ein Anbauteil (102); und
einen Verankerungsgrund (104);
wobei die Schraube (106) der Befestigungsvorrichtung (100) derart in den Verankerungsgrund (104) eingebracht oder einbringbar ist, dass das Anbauteil (102) an der freiliegenden Befestigungseinrichtung (114) des Isolationskörpers (110) der Befestigungsvorrichtung (100) befestigt oder befestigbar ist, wodurch das Anbauteil (102) an dem Verankerungsgrund (104) befestigt oder befestigbar ist.

9. Montageanordnung (150) gemäß Anspruch 8, wobei der Verankerungsgrund (104) eine Wand (152) und eine darauf angebrachte thermisch isolierende Dämmschicht (154) aufweist.

10. Montageanordnung (150) gemäß Anspruch 9, aufweisend zumindest eines der folgenden Merkmale:
wobei eine Spitze (118) und ein sich daran anschließender Schaftabschnitt (116) der Schraube (106) in der Wand (152) verankert sind und ein von der Spitze (118) abgewandter anderer Schaftabschnitt (116) der Schraube (106) und zumindest ein Teil des Isolationskörpers (110) in der Dämmschicht (154) angeordnet sind;
wobei die Wand (152) eine Steinwand, eine Holzwand oder eine Metallwand ist;
wobei der Verankerungsgrund (104) auf der Dämmschicht (154) eine Putzschicht (156) aufweist, in der zumindest ein Teil des Isolationskörpers (110) angeordnet ist.

11. Montageanordnung (150) gemäß einem der Ansprüche 8 bis 10, wobei das Anbauteil (102) eine Masse in einem Bereich zwischen 10 kg und 50 kg hat.

12. Verfahren zum Befestigen eines Anbauteils (102) an einem Verankerungsgrund (104), wobei das Verfahren aufweist:
Eindrehen einer Schraube (106) einer Befestigungsvorrichtung (100) gemäß einem der Ansprüche 1 bis 7 in den Verankerungsgrund (104) ohne Mitdrehen des Isolationskörpers (110) derart, dass die Befestigungseinrichtung (114) des Isolationskörpers (110) nach dem Eindrehen freiliegt; und
Befestigen des Anbauteils (102) an der freiliegenden Befestigungseinrichtung (114).

13. Verfahren gemäß Anspruch 12, aufweisend zumindest eines der folgenden Merkmale:
wobei das Verfahren bei Eindrehen der Schraube (106) in den Verankerungsgrund (104) ein gleichzeitiges drehfreies Längssetzen des Isolationskörpers (110) in den Verankerungsgrund (104) aufweist;
wobei das Verfahren ein Einbringen der Schraube (106) teils in eine Wand (152) und teils in eine Dämmschicht (154) des Verankerungsgrunds (104) und ein Einbringen des Isolationskörpers (110) in die Dämmschicht (154) aufweist;
wobei das Verfahren ein dübelfreies, insbesondere vorbohrungsfreies, Einbringen der Schraube (106) in den Verankerungsgrund (104) aufweist;
wobei das Verfahren ein Einbringen eines Dübels (105) in den Verankerungsgrund (104) und nachfolgend ein Einbringen der Schraube (106) in den Dübel (105) aufweist;
wobei das Verfahren ein Befestigen des Anbauteils (102) mittels Einführens eines Dübels (107) in eine Öffnung (128) der freiliegenden Befestigungseinrichtung (114) und mittels nachfolgenden Einführens eines Schraubenabschnitts (137) des Anbauteils (102) in den Dübel (107) aufweist.

14. Verfahren zum Herstellen einer Befestigungsvorrichtung (100) zum Befestigen eines Anbauteils (102) an einem Verankerungsgrund (104), wobei das Verfahren aufweist:
Bereitstellen einer Schraube (106), die zumindest abschnittsweise mit einem Außengewinde (108) zum Eindrehen in den Verankerungsgrund (104) versehen ist;
gegenüber der Schraube (106) drehbares und verschiebegesichertes Anbringen eines thermisch isolierenden Isolationskörpers (110) auf einem Endabschnitt (112) der Schraube (106);
Ausbilden einer Befestigungseinrichtung (114) an dem Isolationskörper (110) zum Befestigen des Anbauteils (102); und
Ausbilden einer Verdrehschutzstruktur (142) an der Außenseite des Isolationskörpers (110).

15. Verfahren gemäß Anspruch 14, aufweisend eines der folgenden Merkmale:
wobei das Verfahren ein Herstellen des Isolationskörpers (110) separat von der Schraube (106) und ein nachfolgendes Anbringen des Isolationskörpers (110) an der Schraube (106) aufweist;
wobei das Verfahren ein Herstellen des Isolationskörpers (110) direkt auf der Schraube (106) aufweist.

## Claims

1. Attachment device (100) for attaching an add-on part (102) to an anchoring base (104), wherein the attachment device (100) comprises:
a screw (106) which is provided at least in portions with an exterior thread (108) for screwing into the anchoring base (104); and
a thermally isolating isolation body (110) which is fixed on an end portion (112) of the screw (106) in a manner rotatable with respect to the screw (106) and secured against displacement, and which comprises an attachment unit (114) for attaching the add-on part (102) when the screw (106) is anchored in the anchoring base (104), and
wherein the isolation body (110) comprises an anti-rotation protection (142) at its exterior side.

2. Attachment device (100) according to claim 1, comprising at least one of the following features:
wherein the isolation body (110) is fixedly mounted on the screw (106) in a longitudinal direction and a transverse direction;
wherein substantially an entire shaft (116) of the screw (106) is provided with the exterior thread (108);
wherein the screw (106) comprises a drive (126) for rotary driving the screw (106) at a front side (124) which is arranged in the isolation body (110), wherein in particular the drive (126) for rotary driving the screw (106) is actuatable through a part of the attachment unit (114), when no add-on part (102) is mounted at the attachment unit (114);
wherein the attachment unit (114) comprises an opening (128) in the isolation body (110) by which an interior thread (130) for mounting the add-on part (102) is delimited;
wherein an extended head (132) of the screw (106) is received in an undercut (134) of the isolation body (110) in a tensile-resistant manner.

3. Attachment device (100) according to one of the claims 1 to 2, wherein the isolation body (110) comprises an isolation sleeve.

4. Attachment device (100) according to claim 3, wherein the isolation sleeve comprises a first shell body (136) and a second shell body (138) which commonly fully circumferentially enclose the screw (106).

5. Attachment device (100) according to claim 4, comprising at least one of the following features:
wherein the first shell body (136) and the second shell body (138) are selectively separable from each other or connectable with each other;
wherein the first shell body (136) and the second shell body (138) are selectively separable from the screw (106) and connectable with the screw (106).

6. Attachment device (100) according to claim 4 or 5, wherein the first shell body (136) and the second shell body (138) are pivotably connected with each other, in particular by a film hinge.

7. Attachment device (100) according to one of the claims 1 to 6, comprising at least one of the following features:
wherein the anti-rotation protection structure (142) comprises an anti-rotation ridge which extends in a placing direction, in particular a plurality of anti-rotation ridges which are arranged distributed in the circumferential direction and which extend in the placing direction;
wherein the screw (106) is a metal screw; wherein the isolation body (110) is a plastic body.

8. Mounting arrangement (150) comprising:
an attachment device (100) according to one of the claims 1 to 7;
an add-on part (102); and
an anchoring base (104);
wherein the screw (106) of the attachment device (100) is inserted or insertable in the anchoring base (104) such that the add-on part (102) is attached or attachable at the exposed attachment unit (114) of the isolation body (110) of the attachment device (100), whereby the add-on part (102) is attached or attachable at the anchoring base (104).

9. Mounting arrangement (150) according to claim 8, wherein the anchoring base (104) comprises a wall (152) and a thermally isolating insulation layer (154) attached thereon.

10. Mounting arrangement (150) according to claim 9, comprising at least one of the following features:
wherein a tip (118) and a shaft portion (116) of the screw (106) which is adjoining to it are anchored in the wall (152), and another shaft portion (116) of the screw (106) which is facing away from the tip (118) and at least a part of the isolation body (110) are arranged in the insulation layer (154);
wherein the wall (152) is a stone wall, a wood wall, or a metal wall;
wherein the anchoring base (104) comprises a plaster layer (156) on the insulation layer (154) in which at least a part of the isolation body (110) is arranged.

11. Mounting arrangement (150) according to one of the claims 8 to 10, wherein the add-on part (102) has a mass in a range between 10 kg and 50 kg.

12. Method for attaching an add-on part (102) at an anchoring base (104), wherein the method comprises:
screwing-in a screw (106) of an attachment device (100) according to one of the claims 1 to 7 into the anchoring base (104) without co-rotating the isolation body (110), such that the attachment unit (114) of the isolation body (110) is exposed after the screwing-in; and
attaching the add-on part (102) at the exposed attachment unit (114).

13. Method according to claim 12, comprising at least one of the following features:
wherein the method comprises, when screwing-in the screw (106) into the anchoring base (104), simultaneously rotation-freely longitudinal placing of the isolation body (110) into the anchoring base (104);
wherein the method comprises inserting the screw (106) partially into a wall (152) and partially into an insulation layer (154) of the anchoring base (104) and inserting the isolation body (110) into the insulation layer (154);
wherein the method comprises dowel-freely, in particular predrilling-freely, introducing the screw (106) into the anchoring base (104);
wherein the method comprises inserting a dowel (105) into the anchoring base (104) and subsequently introducing the screw (106) into the dowel (105);
wherein the method comprises attaching the add-on part (102) by inserting a dowel (107) into an opening (128) of the exposed attachment unit (114) and a subsequently inserting a screw portion (137) of the add-on part (102) into the dowel (107).

14. Method for manufacturing an attachment device (100) for attaching an add-on part (102) at an anchoring base (104), wherein the method comprises:
providing a screw (106) which is provided at least in portions with an exterior thread (108) for screwing into the anchoring base (104);
attaching a thermally isolating isolation body (110) in a manner rotatable and secured against displacement with respect to the screw (106), on an end portion (112) of the screw (106);
forming an attachment unit (114) at the isolation body (110) for attaching the add-on part (102); and
forming an anti-rotation protection structure (142) at the exterior side of the isolation body (110).

15. Method according to claim 14, comprising one of the following features:
wherein the method comprises manufacturing the isolation body (110) separately from the screw (106) and subsequently attaching the isolation body (110) at the screw (106);
wherein the method comprises manufacturing the isolation body (110) directly on the screw (106).

## Revendications

1. Dispositif de fixation (100) permettant de fixer une pièce rapportée (102) à un fond d'ancrage (104), dans lequel le dispositif de fixation (100) présente :
une vis (106) munie au moins par sections d'un filetage extérieur (108) permettant un vissage dans le fond d'ancrage (104) ; et
un corps isolant (110) thermiquement isolant mis en place sur une section d'extrémité (112) de la vis (106) de manière à pouvoir tourner et être bloqué en translation par rapport à la vis (106), et présentant un dispositif de fixation (114) permettant de fixer la pièce rapportée (102) lorsque la vis (106) est ancrée dans le fond d'ancrage (104), et
dans lequel le corps isolant (110) présente une structure anti-rotation (142) au niveau de sa face extérieure.

2. Dispositif de fixation (100) selon la revendication 1, présentant au moins une des caractéristiques ci-dessous :
le corps isolant (110) est monté sur la vis (106) de manière fixe dans les directions longitudinale et transversale ;
essentiellement la totalité d'une tige (116) de la vis (106) est munie du filetage extérieur (108) ;
la vis (106) présente au niveau d'une face frontale (124) agencée dans le corps isolant (110) un entraînement (126) permettant d'entraîner en rotation la vis (106), dans lequel l'entraînement (126) permettant d'entraîner en rotation la vis (106) peut en particulier être actionné grâce à une partie du dispositif de fixation (114) si aucune pièce rapportée (102) n'est montée au niveau du dispositif de fixation (114) ;
le dispositif de fixation (114) présente au sein du corps isolant (110) un orifice (128) qui délimite un filetage intérieur (130) permettant le montage de la pièce rapportée (102) ;
une tête évasée (132) de la vis (106) est accueillie dans une contre-dépouille (134) du corps isolant (110).

3. Dispositif de fixation (100) selon l'une quelconque des revendications 1 à 2, dans lequel le corps isolant (110) présente un manchon isolant.

4. Dispositif de fixation (100) selon la revendication 3, dans lequel le manchon isolant présente un premier corps de coque (136) et un second corps de coque (138) qui à eux deux enferment complètement la vis (106).

5. Dispositif de fixation (100) selon la revendication 4, présentant au moins une des caractéristiques ci-dessous :
le premier corps de coque (136) et le second corps de coque (138) peuvent de manière facultative être séparés l'un de l'autre ou reliés l'un à l'autre ;
le premier corps de coque (136) et le second corps de coque (138) peuvent de manière facultative être séparés de la vis (106) ou reliés à la vis (106).

6. Dispositif de fixation (100) selon la revendication 4 ou 5, dans lequel le premier corps de coque (136) et le second corps de coque (138) sont reliés l'un à l'autre de manière pivotante, en particulier au moyen d'une charnière à film.

7. Dispositif de fixation (100) selon l'une quelconque des revendications 1 à 6, comprenant au moins une des caractéristiques ci-dessous :
la structure anti-rotation (142) présente une nervure anti-rotation s'étendant dans le sens de pose, en particulier une pluralité de nervures anti-rotation réparties dans le sens circonférentiel et s'étendant dans le sens de pose ;
la vis (106) est une vis métallique ;
le corps isolant (110) est un corps en plastique.

8. Ensemble de montage (150), présentant :
un dispositif de fixation (100) selon l'une quelconque des revendications 1 à 7 ; et
une pièce rapportée (102) ; et
un fond d'ancrage (104) ;
dans lequel la vis (106) du dispositif de fixation (100) est insérée ou peut être insérée dans le fond d'ancrage (104) de telle manière que la pièce rapportée (102) est fixée ou peut être fixée au dispositif de fixation (114) exposé du corps isolant (110) du dispositif de fixation (100), de sorte que la pièce rapportée (102) est fixée ou peut être fixée au fond d'ancrage (104).

9. Ensemble de montage (150) selon la revendication 8, dans lequel le fond d'ancrage (104) présente une paroi (152) et une couche d'isolation (154) thermiquement isolante mise en place sur ladite paroi.

10. Ensemble de montage (150) selon la revendication 9, présentant au moins une des caractéristiques ci-dessous :
une pointe (118) et une section de tige (116), adjacente à ladite pointe, de la vis (106) sont ancrées dans la paroi (152) et une autre section de tige (116), opposée à la pointe (118), de la vis (106) et au moins une partie du corps isolant (110) sont agencées dans la couche d'isolation (154) ;
la paroi (152) est une paroi en pierre, une paroi en bois ou une paroi en métal ;
le fond d'ancrage (104) présente sur la couche d'isolation (154) une couche d'enduit (156) au sein de laquelle est agencée au moins une partie du corps isolant (110).

11. Ensemble de montage (150) selon l'une quelconque des revendications 8 à 10, dans lequel la pièce rapportée (102) a une masse qui se situe dans une plage comprise entre 10 kg et 50 kg.

12. Procédé de fixation d'une pièce rapportée (102) à un fond d'ancrage (104), dans lequel le procédé comprend les étapes consistant à :
visser une vis (106) d'un dispositif de fixation (100) selon l'une quelconque des revendications 1 à 7 dans le fond d'ancrage (104) sans tourner le corps isolant (110), de telle manière que le dispositif de fixation (114) du corps isolant (110) est exposé après le vissage ; et
fixer la pièce rapportée (102) sur le dispositif de fixation (114) exposé.

13. Procédé selon la revendication 12, présentant au moins une des caractéristiques ci-dessous :
lors du vissage de la vis (106) dans le fond d'ancrage (104), le procédé présente un positionnement longitudinal simultanément non rotatif du corps isolant (110) dans le fond d'ancrage (104) ;
le procédé comprend l'insertion de la vis (106) en partie dans une paroi (152) et en partie dans une couche d'isolation (154) du fond d'ancrage (104), et l'insertion du corps isolant (110) dans la couche d'isolation (154) ;
le procédé comprend l'insertion sans cheville, en particulier sans pré-perçage, de la vis (106) dans le fond d'ancrage (104) ;
le procédé comprend l'insertion d'une cheville (105) dans le fond d'ancrage (104) et ensuite l'insertion de la vis (106) dans la cheville (105) ;
le procédé comprend la fixation de la pièce rapportée (102) grâce à l'introduction d'une cheville (107) dans un orifice (128) du dispositif de fixation (114) exposé et grâce à l'insertion, consécutive, d'une section de vis (137) de la pièce rapportée (102) dans la cheville (107).

14. Procédé de fabrication d'un dispositif de fixation (100) permettant de fixer une pièce rapportée (102) à un fond d'ancrage (104), dans lequel le procédé comprend les étapes consistant à :
fournir une vis (106) munie au moins par sections d'un filetage extérieur (108) permettant un vissage dans le fond d'ancrage (104),
mettre en place un corps isolant (110) thermiquement isolant sur une section d'extrémité (112) de la vis (106) de manière à ce qu'il puisse tourner et être bloqué en translation par rapport à la vis (106) ;
former un dispositif de fixation (114) sur le corps isolant (110) afin de fixer la pièce rapportée (102) ; et
former une structure anti-rotation (142) sur le côté extérieur du corps isolant (110).

15. Procédé selon la revendication 14, présentant une des caractéristiques ci-dessous :
le procédé comprend la fabrication du corps isolant (110) séparément de la vis (106), et la mise en place ultérieure du corps isolant (110) sur la vis (106) ;
le procédé comprend la fabrication du corps isolant (110) directement sur la vis (106).
